# EUROPÄISCHE PATENTSCHRIFT

(11) **EP 2 577 285 B1**
(45) Veröffentlichungstag und Bekanntmachung des Hinweises auf die Patenterteilung: **24.05.2023**
(21) Anmeldenummer: 11721244.9
(22) Anmeldetag: 24.05.2011
(51) Int. Cl.: G01N 30/12

(54) **VERFAHREN ZUR PROBENVORBEREITUNG BEI CHROMATOGRAPHISCHEN TRENNMETHODEN UND VORRICHTUNGEN ZUR DURCHFÜHRUNG EINER PROBENVORBEREITUNG**
METHOD FOR PREPARING SAMPLE FOR CHROMATOGRAPHIC SEPARATION AND DEVICE FOR CONDUCTING SAMPLE PREPARATION
PROCÉDÉ DE PRÉPARATION D'ÉCHANTILLON POUR SÉPARATION PAR CHROMATOGRAPHIE ET APPAREIL POUR PRÉPARER UN ÉCHANTILLON

(30) Priorität: 29.05.2010 DE 102010022017
(43) Veröffentlichungstag der Anmeldung: 10.04.2013
(73) Patentinhaber: Gerstel Systemtechnik GmbH & Co. KG, 45473 Mülheim (DE)
(72) Erfinder: SANDRA, Patrick, B-8510 Marke (BE); TIENPONT, Bart, B-8550 Zwevegem (BE); DAVID, Frank, B-8310 Brügge (DE); SANDRA, Tom, B-8510 Bellegem (BE); SANDRA, Koen, B-8510 Bellegem (BE)
(74) Vertreter: Henseler, Daniela
(86) Internationale Anmeldenummer: PCT/EP2011/002563
(87) Internationale Veröffentlichungsnummer: WO 2011/151027

(56) Entgegenhaltungen:
- EP-A1- 0 199 645
- EP-A1- 1 798 551
- EP-A2- 0 510 511
- DE-A1- 1 773 141
- DE-A1- 19 817 016
- DE-C1- 19 720 687
- GB-A- 2 261 827
- US-A- 3 179 499
- US-A- 3 463 012
- US-A1- 2005 229 723
- POOLE S K ET AL: "Sample preparation for chromatographic separations: an overview", ANALYTICA CHIMICA ACTA, ELSEVIER, AMSTERDAM, NL, Bd. 236, 1. Januar 1990 (1990-01-01), Seiten 3-42, XP026725611, ISSN: 0003-2670, DOI: DOI:10.1016/S0003-2670(00)83297-3 [gefunden am 1990-01-01]

## Beschreibung

Die Erfindung betrifft Verfahren und Vorrichtungen zur Probenvorbereitung bei chromatographischen Trennmethoden nach dem Oberbegriff des Anspruchs 1 und 16.

Die chromatographischen Trennmethoden zählen zu den wichtigsten Analysemethoden bei der qualitativen und quantitativen Bestimmung von Probeninhaltsstoffen. Die Effizienz der Trenntechniken lässt sich in der Regel durch eine geeignete Probenvorbereitung steigern. Zur Höchstleistung in Präzision, Wiederholbarkeit und Probendurchsatz gelangt der Anwender indes nur, wenn es ihm gelingt, möglichst viele Probenvorbereitungsschritte zu automatisieren.

EP 1 798 551 A1 offenbart eine Methode und eine Vorrichtung zur Durchführung einer Probenvorbereitung für ein Analysegerät, insbesondere einen Gaschromatographen. Die Vorrichtung enthält ein durch eine selbstdichtende Abdichtung, insbesondere ein Septum, verschließbares Probengefäß in Form eines röhrchenförmigen Behälters, der ein Probenfach zur Aufnahme einer Untersuchungssubstanz bildet. Ferner umfasst die Vorrichtung eine eine Heizvorrichtung aufweisende Halterung, in die das Probengefäß mit seinem Probenfach zum Erhitzen der Untersuchungssubstanz einsetzbar ist.

Aus EP 0 510 511 A2 ist eine Vorrichtung und ein Verfahren zur Probenvorbereitung bei chromatographischen Trennmethoden bekannt, bei dem ein Probengefäß teilweise mit einer Untersuchungssubstanz geführt und verschlossen wird. Die Untersuchungssubstanz wird einer thermo-chemischen Reaktion unterworfen. Mittels einer Entnahmevorrichtung werden Proben aus dem Probengefäß zu einer analytischen Untersuchung entnommen. Das Probengefäß bildet eine Kavität, in die die Untersuchungssubstanz als eine Seele eingefüllt wird. Eine Heizstrecke für eine indirekte Wärmeübertragung ist entlang der Befüllung mit Untersuchungssubstanz angelegt.

Aus GB 2 261 827 A ist eine Methode zur Vorbereitung bei chromatographischen Trennmethoden bekannt, bei dem ein Probengefäß teilweise mit einer Untersuchungssubstanz gefüllt und verschlossen wird. Danach wird die Untersuchungssubstanz einer thermo-chemischen Reaktion unterworfen, insbesondere einer Pyrolyse. Das Probengefäß bildet eine Kavität, an die eine Heizstrecke angelegt wird. Mittels einer Entnahmevorrichtung werden Proben aus dem Probengefäß zur analytischen Untersuchung entnommen.

Aus POOLE S K ET AL: "Sample preparation for chromatographic separations: an overview", ANALYTICA CHIMICA ACTA, ELSEVIER, AMSTERDAM, NL, Bd. 236, 1. Januar 1990 (1990-01-01), Seiten 3-42, ist eine Methode zur Vorbereitung von Proben für Chromatographie-Analysen bekannt, wobei ein Lösungsmittel zur Probe hinzugefügt wird.

Aus US 3 179 499 A ist eine Vorrichtung zur Durchführung einer Probenvorbereitung für ein Analysegerät bekannt, insbesondere einen Chromatographen.

Dabei ist das Probengefäß als ein Einsatzfläschchen ausgebildet, das in einen Innenraum eines mit einer Verschlusskappe verschließbaren Modulfläschchens eingesetzt ist, dessen unteres Teil eine Heizvorrichtung in das Modulfläschchen integriert. Die Heizvorrichtung erhitzt ein Probenfach des Probengefäßes. Für eine Stromversorgung der Heizvorrichtung ist ein Anschlusselement vorgesehen, das eine elektrische Verbindung zu einem separaten Aufheizsockel aufweist.

Aus DE-OS 1 773 141 ist ein Verfahren zur Probengabe bei Gasanalysegeräten, insbesondere bei Gaschromatographen, bekannt, bei dem ein Probengefäß teilweise mit einer flüssigen oder festen Untersuchungssubstanz gefüllt und danach mit einer selbstdichtenden Membran versehen wird. Durch Einstellung der Temperatur des Probengefäßes wird erreicht, dass die flüchtigen Komponenten sich in dem freien Innenraum des Probengefäßes anreichern. Um Proben aus diesem Gasraum zu entnehmen, wird durch die Membran eine Probenentnahmevorrichtung hindurchgestochen. Die bei dieser so genannten Headspace-Methode entnommenen flüchtigen Bestandteile werden dann gasanalytisch untersucht.

Um die Zahl der gemessenen Komponenten in einer Untersuchungssubstanz zu verringern, indem nicht zur Messung benötigte Komponenten gebunden oder in Substanzen verwandelt werden, die vom Detektor eines Messgerätes nicht erkannt werden, wird die Untersuchungssubstanz einer chemischen Reaktion unterworfen, bei der mindestens eine Probenkomponente in eine andere Substanz verwandelt wird. Eine Umwandlung von Untersuchungssubstanzen lässt sich durch Reagenzien oder durch lytische Prozesse wie Elektrolyse, Pyrolyse usw. erreichen.

Zur automatischen Durchführung des Verfahrens werden verschiedene Probengefäße in einer Reihe auf einer Transportvorrichtung aufgestellt, die Stationen besitzt, an denen die Probengefäße einer Behandlung unterzogen werden. Hierzu zählt die Auslösung einer chemischen Reaktion wenigstens einer Probenkomponente und der Transport der Probengefäße nach einer gewissen Strecke unter einer Entnahmevorrichtung.

Im Falle der Pyrolyse wird die Untersuchungssubstanz in Metallschiffchen gefüllt, und diese Schiffchen werden in die Probengefäße gestellt. Die Schiffchen können dann wieder an bestimmten Stellen der Transportvorrichtung beispielsweise induktiv geheizt werden. Untersucht werden in diesem Falle die meist flüchtigen Pyrolyseprodukte.

Zur Aufbereitung fester Proben mit Hilfe pyrolytischer Zersetzung für eine Analyse mittels eines Gaschromatographen ist allgemein bekannt, Untersuchungssubstanzen unmittelbar im Gaschromatographen(GC)-Eingang unter Luftausschluss zu zersetzen. Die Pyrolyseprodukte werden der gängigen Praxis folgend auf die GC-Säule geleitet, aufgetrennt und vermessen.

Wie aus DE 42 06 109 C2 bekannt ist, wird die pyrolytische Zersetzung von chemischen Substanzen in der analytischen Chemie beispielsweise auch angewandt, um aus festen, hochmolekularen Stoffen niedermolekulare Produkte zu gewinnen, die durch chromatographische Trennmethoden separiert und identifiziert werden können. Dazu werden die zu untersuchenden Substanzen in Metallschiffchen in ein Reaktorgehäuse eingeführt. Die Metallschiffchen werden erhitzt zur Einstellung einer Pyrolysetemperatur. Das Reaktorgefäß wird von einem Trägergasstrom durchspült, der die Pyrolyseprodukte in eine analytische Messvorrichtung führt.

Der thermische Abbau (Pyrolyse, Thermolyse) von halbfesten und festen Proben vor der chemischen Analyse der resultierenden Abbauprodukte ist heutzutage ein umfangreich verwendetes Probenvorbereitungsverfahren für die Identifikation oder Charakterisierung von festen oder halbfesten Proben. Im analytischen Maßstab wird eine Probe, typischerweise im Bereich von µg bis mg, in einen kleinen Behälter eingebracht oder direkt mit einem Heizmedium in Kontakt gebracht. Die Probe wird während einer sehr kurzen Zeit auf eine Temperatur erhitzt, die eine thermo-chemische Reaktion der Probe ermöglicht.

Die Pyrolyse wird im Allgemeinen bei Temperaturen zwischen 500°C und 1400°C durchgeführt. Die Produkte des thermischen Abbaus (Pyrolysat) werden dann bevorzugt durch chromatographische Trennverfahren, überwiegend Gaschromatographie, analysiert. In anderen Fällen wird das Pyrolysat direkt in einen Detektor, meist ein Massenspektrometer, für eine allgemeine Charakterisierung der Pyrolysatzusammensetzung gegeben. Die typischerweise durch Pyrolyse analysierten Proben sind heutzutage biologische Proben und Umweltproben, oder in künstlerischen Materialien, in Nahrungsmittel- und Landwirtschaftsanwendungen, in der Geochemie und Kraftstoffquellen, in der Forensik und synthetischen Polymeren zu finden. Ferner stehen verschiedene chemische Reagensprodukte zur Verfügung für die in-situ-Derivatisierung von polaren Pyrolysatverbindungen. Polare Verbindungen, die bei der Gaschromatographie schlechte Peakformen ergeben, sind folglich durch eine Modifikation der Pyrolysatverbindungsstruktur detektierbar.

Nachteilig ist, dass die thermo-chemische Aufbereitung der Proben apparativ aufwändig ist und den Einsatz von so genannten Schiffchen erfordert. Üblich ist deshalb die direkte Kopplung mit der Gaschromatographie, die allerdings zu einem schnellen Ausspülen der zu analysierenden Substanzen in einem Gaschromatographen führt. DE 198 17 016 A1 zeigt ein Probenaufnahmerohr mit einer Probe, die in eine Heizschlange einsteckbar ist. DE 197 20 687 C1 zeigt ein Pyrolyseröhrchen in einer Induktionsspule. DE 1 846 022 U zeigt eine Pyrolysezelle, umgeben von einer Platindraht-Spirale. DE 1 598 436 A zeigt einen Heizwiderstand in einem Pyrolysenraum. Aufgabe der Erfindung ist es daher, ein Verfahren zur Probenvorbereitung und eine Vorrichtung zur Durchführung einer Probenvorbereitung zu schaffen, die die automatisierte Handhabung der Proben mit thermo-chemischer Aufbereitung derselben zur analytischen Untersuchung der thermischen Abbauprodukte verbessert.

Diese Aufgabe wird durch die Merkmale der Ansprüche 1 und 15 gelöst.

Hierdurch werden Verfahren zur Probenvorbereitung bei chromatographischen Trennmethoden und Vorrichtungen zur Durchführung einer Probenvorbereitung geschaffen, die eine vorteilhafte thermische Behandlung (Pyrolyse) der jeweils zu untersuchenden Probe erlauben. Das erfindungsgemäße Probengefäß bildet einen Reaktionsraum, der eine schnelle Aufheizung der Probe erlaubt.

In das Probengefäß können ferner Flüssigkeitsmengen eingegeben werden, um chemische Reaktionen vor und/oder nach der thermischen Behandlung der Probe durchführen zu können. Das Probengefäß ist folglich vorzugsweise gleichzeitig auch eine Art Reagenzglas. In dem Probengefäß können die umgewandelten bzw. abgebauten Produkte/Verbindungen nach der thermischen Behandlung gelöst werden. Wesentlich für die Reproduzierbarkeit und die Automatisierbarkeit ist, dass der Thermoprozess und gegebenenfalls ein Auflösungsprozess mit oder ohne chemische Reaktion vor und/oder nach dem Thermoprozess in dem Probengefäß stattfinden können. Das Einspritzsystem des Chromatographiesystems oder Detektionssystems sowie die Trennsäule werden durch den Thermoprozess nicht kontaminiert, da die Entnahme für den Einspritzprozess aus dem Probengefäß erfolgt. Die thermo-chemische Reaktion in dem Probengefäß wird unabhängig vom Analyseprozess ausgeführt. Keine direkte Kopplung wird mit einem Chromatographiesystem hergestellt.

Eine Probe kann genommen und unmittelbar im Probengefäß aufbewahrt und für eine Pyrolyse, beispielsweise ohne Änderung ihres Charakters zu einem Labor gesandt werden. Mikroorganismen wie Bakterien und Pilze können daher gebrütet oder geerntet und direkt in ein (sterilisiertes) Fläschchen gegeben werden. Ebenfalls können die pyrolytisch abgebauten Produkte gelagert werden. Das geschlossene System begrenzt das Risiko von Verunreinigungen.

Vorzugsweise wird eine dezentrale Schnittstelle auf Basis eines Fläschchens geschaffen. Diese Schnittstelle umfasst besonders bevorzugt eine Fläschchenanordnung mit einem Modulfläschchen, das mit einem integrierten Heizelement ausgebildet ist. In das Modulfläschchen ist ein Einsatzfläschchen als Probengefäß eingesetzt. Verschließbar ist das Modulfläschchen durch eine Kappe mit Septum (auch Injektionsstopfen). Dieses Septum deckt vorzugsweise gleichzeitig auch das Einsatzfläschchen ab. Proben werden in das Einsatzfläschchen gegeben und dieses wird dann auf eine Temperatur erhitzt, die eine thermo-chemische Reaktion, insbesondere einen thermischen Abbau (Pyrolyse, Thermolyse), der Probe ermöglicht. Durch das Septum sind Gase und/oder Flüssigkeiten in das Einsatzfläschchen als Probengefäß einspritzbar. Das Modulfläschchen ist folglich vorzugsweise ein Injektionsfläschchen (auch Vial) mit einem Innenbehältnis als Probengefäß.

Die Abmessungen eines Modulfläschchens können so gewählt werden, dass diese durch die meisten kommerziell erhältlichen Roboter und automatischen Probennahmevorrichtungen einer Chromatographieausrüstung transportiert und gehandhabt werden können.

Das Probengefäß kann vor der thermischen Behandlung mit einem Inert- oder reaktiven Gas gespült werden. Nach der thermischen Behandlung der Probe kann zugelassen werden, dass sich das Probengefäß abkühlt.

Ferner kann eine kleine Menge an Lösungsmittel in das Probengefäß gegossen werden, um die Produkte des thermischen Abbaus aufzulösen. Diese Lösung kann dann einer chemischen Analyse, insbesondere durch Gaschromatographie (GC), Hochleistungs-Flüssigkeitschromatographie (HPLC), superkritischer Fluidchromatographie (SFC) oder Kapillarelektrophorese (CE), unterzogen werden.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1A und 1B sowie Fig. 2A und 2B zeigen schematisch Schnitte eines Probengefäßes mit einer Halterung (Ausführungsbeispiele, die in Fig. 1A, 1B, 2A und 2B gezeigt werden, sind nicht Teil der vorliegenden Erfindung),
Fig. 3 zeigt schematisch einen Schnitt eines Modulfläschchens mit einem Einsatzfläschchen als Probengefäß,
Fig. 4A und Fig. 4B zeigen schematisch das Modulfläschchen mit dem Einsatzfläschchen als Probengefäß gemäß Fig. 1 in einer perspektivischen Explosionsdarstellung und im Längsschnitt derselben,
Fig. 5 zeigt schematisch eine Modulfläschchenstation,
Fig. 6 zeigt schematisch eine automatisierte Probenvorbereitungsstation.

Die Erfindung betrifft Verfahren zur Probenvorbereitung bei chromatographischen Trennmethoden und Vorrichtungen zur Durchführung einer Probenvorbereitung.

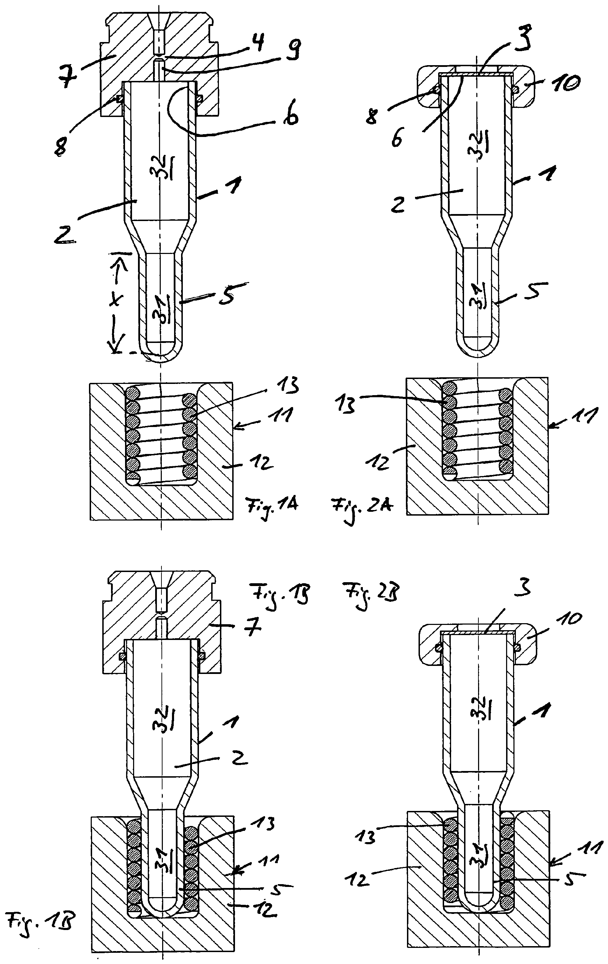

Wie in Fig. 1A, Fig. 1B, Fig. 2A, Fig. 2B dargestellt, wird bei einem Verfahren zur Probenvorbereitung ein Probengefäß 1 verwendet. Dieses Probengefäß 1 bildet eine Kavität, in die Untersuchungssubstanz als eine Seele eingefüllt wird. Das Probengefäß 1 ist vorzugsweise ein Hohlgefäß, insbesondere ein röhrchenförmiges Behältnis, zur Aufnahme von Untersuchungssubstanz. Die Untersuchungssubstanz wird in dem Probengefäß 1 einer Pyrolyse unterworfen. Das Probengefäß 1 wird über seine einseitige Öffnung nur teilweise mit der Untersuchungssubstanz bzw. Probe gefüllt und verschlossen. Die Probe besteht vorzugsweise aus festen, halbfesten oder eingedampften Produkten. Das Verschließen des Probengefäßes 1 erfolgt vorzugsweise mit einem Septum 3 oder einer selbstdichtenden Trennwand 4.

Länge und Weite des Probengefäßes 1 sind derart gewählt, dass durch die eingebrachte Probe, deren Menge im analytischen Maßstab üblicherweise im Bereich von µg bis mg liegt, maximal eine Teillänge X eines Innenraums 2 des Probengefäßes 1 bzw. dessen Kavität mit der Probe gefüllt wird. Der Innenraum 2 des Probengefäßes 1 bildet insoweit ein Probenfach 31. Oberhalb dieser Teillänge X bildet der Innenraum 2 des Probengefäßes 1 ein Kopfraumfach bzw. ein Innenraumfach 32, das beispielsweise einen freien Innenraumabschnitt bilden kann. In dem Kopfraumfach 32 können sich flüchtige Bestandteile anreichern oder Gase eingespült werden, so dass das Kopfraumfach 32 dann einen Gasraum bzw. ein Gasfach bildet. Alternativ oder zusätzlich kann in das Kopfraumfach 32 ein Lösungsmittel und/oder ein Reagens eingefüllt werden, und zwar vor und/oder nach der thermo-chemischen Reaktion der Probe. Das Kopfraumfach 32 kann dann als ein Lösungsmittelfach verwendet werden.

Die Weite des Probengefäßes 1 im Bereich des Probenfaches 31 liegt vorzugsweise in einem Bereich von 1 bis 20 mm. Die Probe kann das Probengefäß 1 mit einer Füllhöhe füllen. Die Untersuchungssubstanz kann dann in dem Probengefäß 1, insbesondere dem Probenfach 31, beispielsweise säulenartig bzw. siloartig aufgehäuft sein. Die Probe kann alternativ auch als Flüssigkeit, einstückiger Festkörper oder Agglomerat in das Probengefäß 1 eingefüllt werden. Oberhalb der Füllmenge bzw. Füllgegenstand erstreckt sich ein Freiraumbereich des Kopfraumfaches 32, der mit einem Gas oder einer Flüssigkeit befüllbar ist.

Die Untersuchungssubstanz bzw. Probe wird in dem Probengefäß 1 einer Pyrolyse unterworfen, bei der mindestens eine Probenkomponente in eine andere Substanz umgewandelt wird. Das Probengefäß 1 ist somit ein Reaktionsgefäß zur Probenvorbereitung.

Die Produkte der thermischen Umwandlung bzw. des thermischen Abbaus werden mit einer Entnahmevorrichtung (nicht dargestellt) aus dem Probengefäß 1 zur analytischen Untersuchung entnommen. Das Probengefäß 1 ist somit ein Reaktionsgefäß zur Probennahme.

Das Probengefäß 1 weist vorzugsweise als Kavität einen Schaft oder eine Gefäßverengung 5 auf, in den oder in die die Untersuchungssubstanz bzw. Probe gegeben wird, um dort der thermo-chemischen Reaktion unterworfen zu werden. Der Schaft (bzw. die Gefäßverengung) 5, der mit der Untersuchungssubstanz zumindest teilweise gefüllt wird, bildet das Probenfach 31 und erstreckt sich folglich vorzugsweise entlang der Teillänge X. Der Schaft 5 bildet vorzugsweise einen unteren Teil des Probengefäßes 1. Das Probengefäß 1 ist dann vorzugsweise fläschchenförmig mit einer wählbaren Nennweite und einem engeren Querschnitt im Bereich des Schaftes 5. Der Schaft 5 bildet quasi einen Fläschchenhals eines auf dem Kopf stehend angeordneten Fläschchens, das einseitig offen ist an einer Fläschchenöffnung 6.

Das Probengefäß 1 ist an einem dem Schaft 5 gegenüberliegenden Ende mit einem einseitig offenen Ende, hier vorzugsweise der Fläschchenöffnung 6, ausgebildet, das durch das Septum 3 oder die selbstdichtende Trennwand 4 verschlossen wird.

Wie Fig. 1A zeigt, ist die selbstdichtende Trennwand 4 vorzugsweise in einem auf das offene Ende aufsetzbaren Transportkopf 7 ausgebildet. Das Probengefäß 1 ist mit seinem offenen Ende abgedichtet in den Transportkopf 7 einsetzbar, wozu beispielsweise ein O-Ring 8 verwendet werden kann. Die selbstdichtende Trennwand 4 verschließt einen Auslasskanal 9, der in das Probengefäß 1 mündet.

Alternativ kann, wie Fig. 2A zeigt, auf das offene Ende des Probengefäßes 1 ein Deckel 10 aufsetzbar sein. Der Deckel 10 sitzt abgedichtet auf dem Probengefäß 1, wozu wiederum ein O-Ring 8 vorgesehen sein kann. Der Deckel 10 weist eine kreisförmige Ausnehmung auf, um das Septum 3 für das Durchstechen mit einer Entnahmevorrichtung (nicht dargestellt) freizugeben.

Wie Fig. 1B und Fig. 2B zeigen, ist zur Pyrolyse der Probe in dem Probengefäß 1 das Probengefäß 1 in eine Heizvorrichtung 11 einsetzbar. Thermisch beaufschlagt wird das Probengefäß 1 nur entlang einer Teillänge des Probengefäßes 1, die vorzugsweise der Teillänge X entspricht. Die Heizvorrichtung 11 ist vorzugsweise als eine Halterung 12 mit einem integrierten Heizelement, das vorzugsweise in Form einer Heizspule bzw. Heizwendel 13 ausgebildet ist, in die das Probengefäß 1 teilweise einsetzbar ist, ausgestaltet. Die Heizspule 13 umgibt das Probengefäß 1 für eine indirekte Wärmeübertragung nur entlang eines Teilabschnitts, der mit der Probe gefüllt ist. Aufgrund der Standhöhe der Probe in dem Probengefäß 1 wird eine Heizstrecke gebildet, entlang der die Probe in dem Probengefäß 1 thermisch beaufschlagt wird. Eine intensive, die Probe durchdringende Wärmeübertragung wird dadurch erreicht, wobei aber nur ein Teilabschnitt des Probengefäßes 1, insbesondere der Kavität, hohen Temperaturen ausgesetzt wird.

Bevorzugt ist, dass neben insbesondere der Wärmestrahlung das Probengefäß 1 über seine Gefäßwandung durch Wärmeleitung, d.h. Berührung mit der Probe, Wärme auf die Probe überträgt.

Die Heizspule 13 kann vor einem Einsetzen des Probengefäßes vorgeheizt sein, um beispielsweise eine Flash-Pyrolyse durchzuführen. Die Heizspule 13 kann auch bei unterschiedlichen Temperaturen betrieben werden, um beispielsweise eine flüssige Probe vor einer Pyrolyse in dem Probengefäß 1 einzudampfen.

Die Probe, die vorzugsweise in die Kavität in Form des Schaftes 5 gefüllt ist, wird also einer Temperaturbehandlung ausgesetzt, die umfänglich des Schaftes 5 angelegt wird. Die Temperaturbehandlung wird auf das untere Probenfach 31 beschränkt, während im bzw. am Kopfraumfach 32 durch ein Auslegen der Länge und des Querschnitts des Probengefäßes 1 entlang des Kopfraumfaches 32 ein Temperaturabfall eingestellt wird. Bei einer Temperaturhöhe der Temperatureinwirkung von bis zu 1400°C wird ein Temperaturabfall (z.B. in der Gefäßwandung des Probengefäßes 1), vorzugsweise auf mindestens 300°C, bis hin zur Fläschchenöffnung 6 des Probengefäßes 1 eingestellt.

Das Probengefäß 1 und die Heizvorrichtung 11 bilden eine Vorrichtung zur Vorbereitung von Proben für ein Analysegerät der chromatographischen Trenntechnik. Als thermo-chemische Reaktion wird eine pyrolytische Zersetzung durchgeführt. Der thermische Abbau kann in einer inerten Atmosphäre durchgeführt werden, d.h. ein Inertgas (Helium, Stickstoff) wird in das Probengefäß 1 eingeführt. Alternativ kann der thermische Abbau in Gegenwart einer Sauerstoffoder Luftatmosphäre ausgeführt werden. Eine solche oxidative Pyrolyse ergibt einen größeren Anteil an oxidierten Pyrolysatverbindungen.

Die Probe und anschließend die thermischen Abbauprodukte können durch in das Probengefäß 1 eingespritzte Reagenzien mit oder ohne chemische Reaktion aufgelöst werden. Das Probengefäß 1 wird folglich auch zur Aufnahme von Flüssigkeiten für chemische Reaktionen eingesetzt. Das Probengefäß 1 ist somit auch ein Reagenzglas für chemische Reaktionen, Untersuchungen und zur Aufbewahrung der Probe, und zwar vor und/oder nach deren thermo-chemischen Behandlung.

Für eine chromatographische Trennung kann aus dem Dampfraum über der aufbereiteten Probe eine Gasphase direkt entnommen werden oder die aufbereitete Probe in einer wählbaren Flüssigkeit gelöst werden. Optimiert ist das Verfahren, wenn die verwendete Flüssigkeit der mobilen Phase entspricht. Gleiches gilt für ein überkritisches Fluid.

Die Kavität des Probengefäßes 1 wird im analytischen Maßstab gefüllt. Das Probengefäß 1 ist insoweit mindestens entlang eines Abschnitts der Teillänge X vorzugsweise (auf)gefüllt, d.h. die Probe ist randseitig begrenzt durch die Wandung des Probengefäßes 1. Es wird dann ein quasi Füllstand in dem Probengefäß 1 erreicht, wodurch eine verbesserte Wärmeübertragung von der Heizvorrichtung 11 erreicht wird. Gegebenenfalls kann durch ein Stopfen eine gleichmäßigere Ausfüllung erreicht werden.

Eine Heizstrecke der Heizvorrichtung 11 für eine indirekte Wärmeübertragung wird entlang der Füllmenge angelegt. Die Form des Probengefäßes 1 ist dazu neben röhrchenfömig oder fingerartig auch mit einer Gefäßverengung bzw. Schaft 5, insbesondere fläschchenförmig, ausbildbar. Das Probengefäß 1 ist vorzugsweise an seinem unteren Ende ein verjüngtes Behältnis. Stets ist das Probengefäß 1 aber vorzugsweise ein einseitig offenes, durch eine Abdeckung (z.B. Injektionsstopfen, PTFE-Septum, selbstdichtende Trennwand usw.) verschließbares Hohlgefäß. Die Heizstrecke wird beschränkt auf den Ort, wo die Probe eingefüllt ist. Die Art, wie die Probe im Probengefäß 1 ansteht, ermöglicht eine hohe thermische Durchdringung derselben.

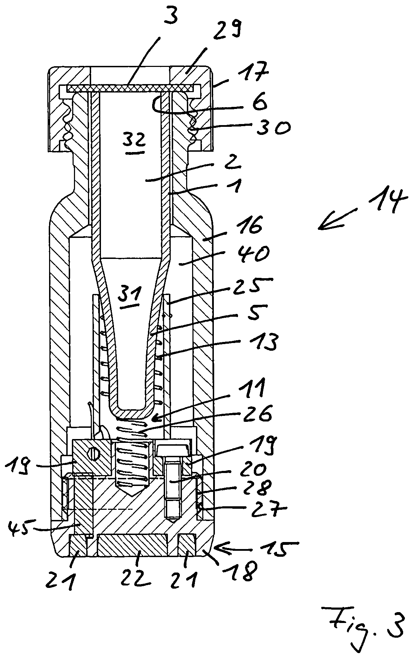

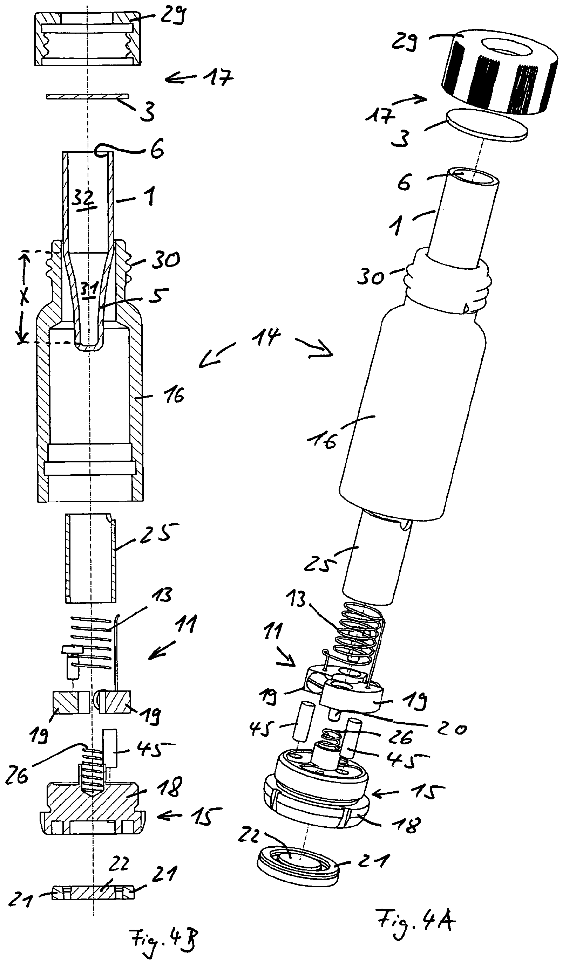

Gemäß dem in den Fig. 3 und Fig. 4A, Fig. 4B dargestellten erfindungsgemäßen Ausführungsbeispiel ist das Probengefäß 1 ein Teil einer Fläschchenanordnung, die eine dezentrale Schnittstelle der analytischen Probenvorbereitung bildet. Die Fläschchenanordnung umfasst ein beheizbares Modulfläschchen 14 mit integrierter Heizvorrichtung 11, in das das Probengefäß 1 als ein Einsatzfläschchen lösbar eingesetzt ist. Verschlossen wird die Fläschchenanordnung durch eine Injektionsabdeckung.

Eine in das Probengefäß 1 eingefüllte feste oder halbfeste Probe als auch eine in dem Probengefäß 1 eingedampfte Flüssigkeit kann auf eine wählbare Temperatur aufgeheizt werden, um beispielsweise eine Pyrolyse durchzuführen. Die vorstehenden Ausführungen zur Ausbildung des Probengefäßes 1 gelten hier entsprechend. In Abwandlung von Fig. 1A, 1B, 2A, 2B ist das Probengefäß 1 hier erfindungsgemäß ein Innengefäß, das in ein Modulfläschchen 14 als Außengefäß lösbar eingesetzt wird.

Das Modulfläschchen 14 ist nach Art eines Vials dimensioniert und umfasst einen Modulfläschchenkörper 16, an den ein unterer Teil 15 und eine obere (Injektions)Kappe 17, jeweils vorzugsweise lösbar, befestigt sind. In einem Aufnahmeraum 40 des Modulfläschchens 14 ist das Probengefäß 1 als Innengefäß vorgesehen. Der untere Teil 15 und die Kappe 17 sind vorzugsweise an den Modulfläschchenkörper 16 ein- oder aufschraubbar.

Der untere Teil 15 enthält bodenseitig des Modulfläschchens 14 die Heizvorrichtung 11, die an einem halterungsartig ausgebildeten elektrischen Isolationsbasisteil 18 angeordnet ist. Dazu sind an dem elektrischen Isolationsbasisteil 18 zwei Metallstücke 19 als Heizdrahtkontakte mit Schrauben 20 befestigt. Zwei Metallringelektroden 21, 22 sind im Isolationsbasisteil 18 angebracht, und elektrische Kontakte zwischen den Metallstücken 19 und den Ringelektroden 21, 22 sind durch Metallstäbe 45, insbesondere massive Kupferstäbe, hergestellt. Die (Platin-) Heizspule 13 ist an den Metallkontaktstücken 19 mit Metallschrauben 24 befestigt. Die Heizspule 13 definiert eine Heizstrecke in axialer Richtung des Modulfläschchens 14. Die Heizspule 13 wird entlang dieser Heizstrecke durch ein Quarzrohr 25 abgestützt, das zudem die axiale Länge der Heizstrecke festlegen kann. Das Quarzrohr 25 bildet insoweit auch eine Abschirmung, um die von der Heizspule 13 erzeugte Temperatur auf die Heizstrecke zu bündeln.

Der untere Teil 15 weist ferner eine kleine Feder 26 auf, durch die das Probengefäß 1 nach oben geschoben wird, wenn es eingesetzt ist. Dies sperrt das Probengefäß 1 mit seinem offenen Ende, der Fläschchenöffnung 6, gegen das Septum 3, das in der Kappe 17 eingelegt ist.

Der Modulfläschchenkörper 16 besteht vorzugsweise aus einem eloxierten (ungefähr 100 µm Oxidschicht) Aluminium und weist bodenseitig ein Innengewinde 27 auf, in das ein Außengewinde 28 des Isolationsbasisteils 18 einschraubbar ist. Das Isolationsbasisteil 18 verschließt so lösbar den Modulfläschchenkörper 16 bodenseitig. Der Modulfläschchenkörper 16 besteht vorzugsweise aus einem Metall oder einer Metalllegierung.

Das Probengefäß 1 besteht vorzugsweise aus Quarz, um Pyrolysetemperaturen bis zu 1400°C standzuhalten. Das vorzugsweise röhrchenförmige Probengefäß 1 weist als ein Einsatzfläschchen einen oberen Abschnitt auf, der breiter ist als ein unterer Abschnitt, der die Gefäßverengung bzw. den Schaft 5 bildet. Das Probengefäß 1 besitzt somit vorzugsweise eine Verjüngung benachbart zum geschlossenen unteren Ende des Probengefäßes 1. Die zu untersuchende Probe wird in diesen unteren Abschnitt gegeben. Die Probe bildet auch hier vorzugsweise eine Seele aus Untersuchungsmaterial in dem Schaft 5 als Kavität.

Das Probengefäß 1 wird derart in den Modulfläschchenkörper 16 eingesetzt, dass der mit der Probe gefüllte Schaft 5 von der Heizspule 13 ummantelt wird. Entlang des Schaftes 5, der die Probe mit beispielsweise einer Füllstandssäule oder als ein- oder mehrstückigen Gegenstand aufnimmt, wird die Heizstrecke angelegt. Folglich ist es nur der untere Abschnitt des Probengefäßes 1, der hohen Temperaturen, insbesondere hohen Pyrolysetemperaturen, ausgesetzt wird.

Der Modulfläschchenkörper 16 wird mit der Kappe 17 verschlossen, die vorzugsweise eine Schraubkappe 29 ist und das Septum 3 trägt. Der Modulfläschchenkörper 16 weist dazu kopfseitig ein Außengewinde 30 auf. Das Septum 3 ermöglicht die Einführung einer Nadel einer Entnahmevorrichtung (nicht dargestellt), die ihrerseits ein Pyrolysegas und/oder eine Pyrolyseflüssigkeit in das Probengefäß 1 einspritzen kann. Das Septum 3 ist vorzugsweise mit einer Polymerbeschichtung, z. B. PTFE, verkleidet, die relativ hohen Temperaturen (bis zu beispielsweise 300°C) standhält.

Das Probengefäß 1 und das Modulfläschchen 14 können durch eine gemeinsame, mit einem Septum 3 versehene Kappe 17 derart verschließbar sein, dass durch eine Entnahmevorrichtung Proben in einfacher Weise aus dem Probengefäß 1 zur analytischen Untersuchung entnehmbar sind. Vorteilhaft wirkt insoweit die Feder 26, weil das Probengefäß 1 sich an dem unteren Teil 15 abstützt und mit einer Vorspannung gegen das Septum 3 gedrückt wird bei verschlossenem Modulfläschchen 14. Das Probengefäß 1 kann ferner durch einen Flaschenhals des Modulfläschchens 14 im Aufnahmeraum 40 des Modulfläschchens 14 ausrichtbar und/oder positionierbar sein.

Die Abmessungen des Modulfläschchenkörpers 16 sind beispielsweise wie folgt. Der Außendurchmesser beträgt 11,5 mm und die Höhe ohne Schraubkappe 29 beträgt 32 mm. Diese Abmessungen sind gleich jenen von Fläschchen mit 2 ml, die typischerweise bei Chromatographieinstrumenten verwendet werden. Das Schraubengewinde 30 des Modulfläschchenkörpers 16 passt beispielsweise zu kommerziell erhältlichen Schraubkappen, so dass diese in Kombination mit dem Modulfläschchenkörper 16 verwendet werden können.

Die Abmessungen eines Probenfaches 31 des einsetzbaren Probengefäßes 1 in Form der Gefäßverengung 5 können beispielsweise wie folgt gewählt werden. Der Innendurchmesser beträgt 1,9 mm und die Länge (Höhe) beträgt 12,5 mm. Das Volumen ist ungefähr 25 µl. Die Abmessungen eines Kopfraumfaches 32 oberhalb des Probenfaches 31 (vgl. Fig. 3) sind beispielsweise wie folgt. Der Innendurchmesser beträgt 5 mm und die Länge (Höhe) beträgt 12,5 mm. Das Innenvolumen beträgt vorzugsweise 10 bis 250 µl. Das Kopfraumfach 32 kann insbesondere als Lösungsmittelfach, insbesondere nach der thermischen Behandlung der Probe, verwendet werden. Die inneren Abmessungen ermöglichen, eine Nadel leicht einzuführen und etwa 50 bis 150 µl Lösungsmittel einzuspritzen.

Bevorzugte Abmessungen für das Probenfach 31 liegen bei Höhen von weniger als 60 bis 70 % einer Gesamthöhe des Probengefäßes 1. Das Probengefäß 1, das vorzugsweise zylinderförmig ausgebildet ist, besitzt vorzugsweise einen Durchmesser von 4 bis 40 mm, insbesondere 4 bis 10 mm im Innenraumfach 32 und vorzugsweise einen Durchmesser von 1 bis 20 mm, insbesondere 1 bis 5 mm, im Probenfach 31.

Das in den Fig. 3 und Fig. 4 dargestellte und vorstehend beschriebene Modulfläschchen 14 ist ein Vial mit eingebauter bzw. integrierter Heizvorrichtung 11 und mit einem einsetzbaren Inneneinsatz in Form eines Probengefäßes 1, dessen befüllte Kavität im Probenfach 31 durch die Heizvorrichtung 11 beheizbar werden kann. Die thermische Behandlung einer Probe ist dadurch dezentral und wird abgekoppelt vom chromatographischen Analysegerät durchgeführt.

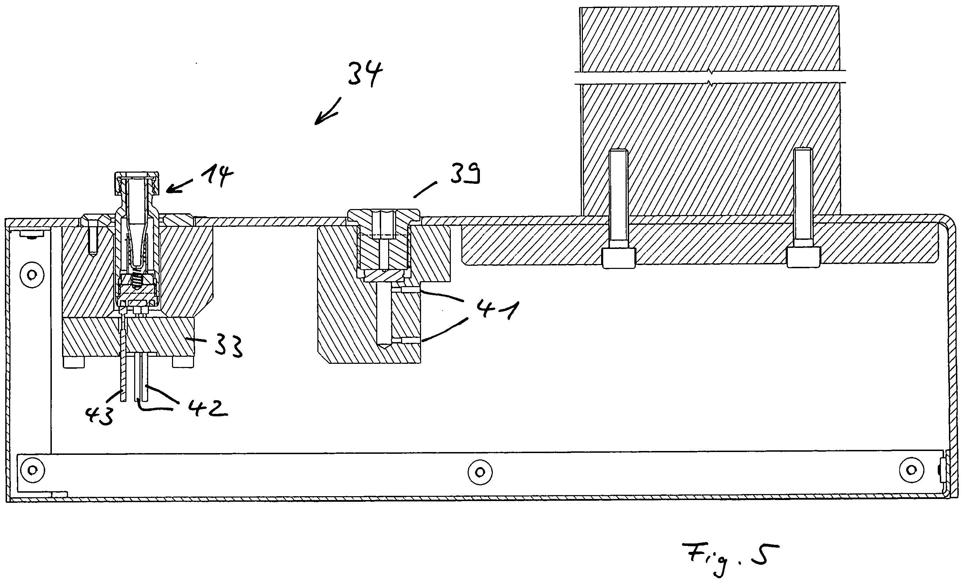

Die Heizvorrichtung 11 kann über eine externe Stromversorgung betätigt werden. Vorzugsweise wird das Modulfläschchen 14 dazu auf einen separaten Aufheizsockel 33 gesetzt. Mit einfacher Anschlusstechnik, wie z.B. federbelasteten Kontakten, Stecktechnik oder plug-in-Technik, kann eine Verbindung zu den Elektroden 21, 22 des unteren Teils 15 des Modulfläschchens 14 geschaffen werden. Die Elektroden 21, 22 bilden folglich Anschlusselemente für eine externe Stromversorgung und sind dazu vorzugsweise außenseitig in das Isolationsbauteil 18 eingelegt. Der Aufheizsockel 33 kann an einer Modulfläschchenstation 34 (vgl. Fig. 5) montiert sein.

Das Probengefäß 1 ist demnach als ein Einsatz für ein (Außen-)Vial ausgebildet, das in einen Aufnahmeraum 40 eines mit einer Kappe 17 verschließbaren Modulfläschchens 14 als ein (Innen-)Vial eingesetzt werden kann. Gebildet werden somit ein Außenvial mit einem Innenvial, die vorzugsweise über einen gemeinsamen Injektionsverschluss verfügen.

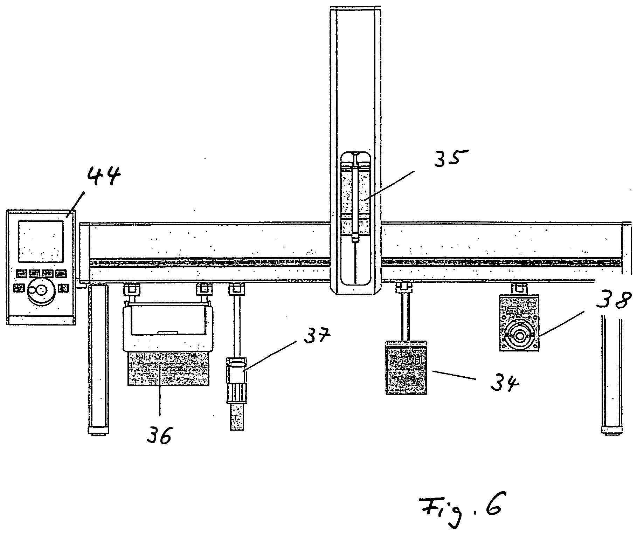

Wie Fig. 6 zeigt, kann die Modulfläschchenstation 34 an einem kommerziell erhältlichen, mit einer Steuereinheit 44 ausgebildeten XYZ-Roboter montiert werden. Das Modulfläschchen 14 kann durch eine Z-Einheit 35 von einem Fläschchenhaltergestell 36 in die Modulfläschchenstation 34 transportiert werden. Nach der Pyrolyse kann Lösungsmittel mit einer Spritze in der Z-Einheit 35 aus einem Lösungsmittelbehälter 37 angesaugt und in das Modulfläschchen 14 eingespritzt werden. Danach kann zur besseren Durchmischung das Modulfläschchen gegebenenfalls geschüttelt werden. Schließlich kann der Extrakt beispielsweise in eine Schleife eingespritzt werden, die an einem Einspritzventil 38 für eine Einspritzung in ein Flüssigkeitschromatographiesystem installiert ist. Das Modulfläschchen 14 kann so als Schnittstelle in einen Roboter für die Probenvorbereitung und Probenaufgabe in der chromatographischen Trenntechnik integriert werden.

Fig. 5 zeigt eine Modulfläschchenstation 34 mit dem Aufheizsockel 33 und einer Durchflusszelle 39 mit einer Gaszu- und Gasabfuhr 41, die beispielsweise mit einem Inertgas gespült wird. Dieses Gas kann mit einer gasdichten Spritze angesaugt und in das Probengefäß 1 eingelassen werden. Alternativ bevorzugt ist eine Doppelnadel mit getrennter Zu- und Abfuhr für das Spülen mit Gas. Die Doppelnadel kann hierzu transportierbar oder verfahrbar ausgebildet sein.

Am Aufheizsockel sind Anschlussleitungen 42, 43 zur Temperatursteuerung vorgesehen. Diese bilden Kontakte zu den Ringelektroden 21, 22. Pro Ringelektrode 21, 22 sind vorzugsweise mehrere Kontakte vorgesehen. Die Kontakte sind ferner vorzugsweise federnd ausgebildet, um eine sichere Kontaktierung zu gewährleisten.

Ein Verfahren für die Pyrolyse und anschließende chromatographische Analyse einer festen Probe kann beispielsweise die folgenden Schritte umfassen:
Eine Probe wird im Probengefäß 1 gewogen und in das Modulfläschchen 14 gestellt und mit der Kappe 17 abgedeckt. Luft wird aus dem Probengefäß 1 gespült und durch Inertgas, z.B. Stickstoffgas, ersetzt. Dies kann mit einer gasdichten Spritze durch mehrere Absaugungen des Gases aus dem Probengefäß 1 und Einspritzen von Stickstoffgas in das Probengefäß 1 durchgeführt werden. Alternativ kann dies durch Eindringen mit einer Doppelnadel durchgeführt werden.

Das Modulfläschchen 14 wird dann entweder per Hand oder durch einen automatischen Roboter zur Modulfläschchenaufnahme mit Heizsockel 33 transportiert.

Eine Pyrolyse kann bei einer programmierten Temperatur durch Anlegen eines gesteuerten elektrischen Stroms an die Heizvorrichtung 11 während einer programmierbaren Zeit durchgeführt werden. Das Modulfläschchen 14 kann danach durch ein Kühlgebläse während einer programmierbaren Zeit gekühlt werden. Das Modulfläschchen 14 kann dann von der Station 34 entnommen und durch eine automatische Probennahmevorrichtung in eine ursprüngliche Ablage zugestellt werden. Das Modulfläschchen 14 kann weiter abgekühlt werden, bevor beispielsweise ein organisches Lösungsmittel zugegeben wird.

Das Lösungsmittel kann mit den Abbauprodukten der Pyrolyse vermischt werden, um die Auflösung der Probenverbindungen zu verbessern. Eine aliquote Menge Lösungsmittel kann schließlich mit einer Spritze vom Probengefäß 1, eingesetzt in das Modulfläschchen 14, zum Injektor eines Chromatographiesystems für eine Analyse überführt werden.

In einer Ausführungsform der Erfindung umfassen die Parameter für die Pyrolyse die Spülung des (Probengefäß-)Kopfraumes, beispielsweise des Kopfraumfaches 32, das Pyrolyse-Temperatur-Zeit-Profil und das Lösungsmittel zum Auflösen der Abbauverbindungen nach der Pyrolyse. Die Luft im Kopfraum des Probengefäßes 1 kann durch ein Inertgas, z.B. Stickstoffgas, ersetzt werden, aber alternativ kann reines Sauerstoffgas zugegeben werden, um Oxidationsprozesse während der Pyrolyse zu verbessern. Die Pyrolysetemperatur kann bevorzugt auf Temperaturen zwischen 500°C und 1400°C während einer Periode bis zu beispielsweise 30 s programmiert werden. Eine Flash-Pyrolyse kann durch sofortiges Erhitzen der Heizspule 13 oder mit einer programmierten Geschwindigkeit ausgeführt werden. Das Lösungsmittel kann als Funktion der Löslichkeit der Abbauprodukte oder der Probenmatrix und als Funktion des Chromatographieverfahrens gewählt werden.

Die Erfindung ermöglicht es, eine Probe in einem Fläschchen vorzubereiten, und dieser Prozess kann vollständig automatisiert werden.

Ein Verfahren für die Pyrolyse und anschließende chromatographische Analyse einer Probe, die einen relativ großen Anteil Wasser oder einer anderen Flüssigkeit enthält bzw. in Wasser oder einer Flüssigkeit gelöst ist, kann die folgenden Schritte umfassen:

Eine Probe wird in das Probengefäß 1 gegossen oder eingewogen und das Probengefäß 1 in das Modulfläschchen 14 gestellt und mit der (Injektions-)Kappe 17 abgedeckt. Das restliche Lösungsmittel oder Wasser der Probe wird durch ein Inertgas, z.B. Stickstoffgas, aus dem Probengefäß 1 gespült. Dies kann durch sanftes Erhitzen der Heizspule 13 in Kombination mit einem Spülen des Kopfraumes 32 des Probengefäßes 1 durchgeführt werden. Dies kann beispielsweise durch Eindringen in das Septum 3 mit einer Doppelnadel durchgeführt werden. Das Modulfläschchen 14 kann dann entweder per Hand oder durch einen automatischen Roboter zu der Station 33 transportiert werden, wo dann die Pyrolyse wie vorstehend beschrieben durchgeführt wird.

Optional kann ein Reagens vor der Pyrolyse zur Probe zugegeben werden. Eine klassische Anwendung kann die Chemolyse und Veresterung von Polymeren bzw. deren Abbauprodukte in Gegenwart von Tetramethylammoniumhydroxid (TMAH) sein. Dieses Reagens kann durch Einspritzen einer kommerziell erhältlichen Lösung von Methanol zur Probe zugegeben werden.

Ein Derivatisierungsreagens kann nach der Pyrolyse zur Probe zugegeben werden. Ein Beispiel ist die Silylierung von Zuckern, die sich aus der Pyrolyse von biologischem Material ergeben können.

Eine weitere Anwendung der Erfindung liegt in der Beseitigung von freien kleinen Molekülen, insbesondere Monomeren aus Polymeren, vor der Pyrolyse. Diese freien Monomere tragen oft falsch positiv zur Monomermenge im Pyrolysat bei. Ein mögliches Verfahren kann daher sein:
Zugabe der Probe in das Probengefäß 1, Zugabe von einem Extraktionsmittel, das das Monomer, aber nicht das Polymer löst, Mischen, Entfernen des Extraktionsmittels und gegebenenfalls zusätzliches Waschen. Nachdem das Waschlösungsmittel entfernt ist, kann die Probe, insbesondere mit Gas, getrocknet werden, während das Probengefäß 1 sanft erhitzt wird und die Pyrolyse schließlich ausgeführt wird.

Das Modulfläschchen 14 kann für eine sequentielle Pyrolyse angewendet werden.

Gemäß der Erfindung kann mit verschiedenen lösungsmittellosen Probeneinführungsverfahren gearbeitet werden, wie beispielsweise Kopfraum-Mikroextraktion (HS-Mikroextraktion), dynamischer Kopfraum-Mikroextraktion (DHS-Mikroextraktion) oder Festphasen-Mikroextraktion (SPME). Im Falle der anschließenden HS-Analyse wird eine Fraktion des Kopfraumes mit einer (erhitzten) Kopfraumspritze abgesaugt und in den Injektor eines Gaschromatographen eingespritzt. Für DHS kann das Probengefäß 1 mit einem GC-Injektor in einer Linie angeordnet werden, und der Kopfraum 32 wird mit einem Inertgas in den Injektor gespült. Alternativ kann der Kopfraum 32 vor der Analyse in einer chemischen oder Kryofalle eingefangen werden.

## Patentansprüche

1. Verfahren zur Probenvorbereitung bei chromatographischen Trennmethoden, bei dem ein Probengefäß (1) teilweise mit einer Untersuchungssubstanz gefüllt und durch eine selbstdichtende Abdeckung verschlossen wird, die Untersuchungssubstanz einer Pyrolyse unterworfen wird, bei der mindestens eine Probenkomponente in eine andere Substanz umgewandelt wird, und bei dem mit einer Entnahmevorrichtung Proben aus dem Probengefäß (1) zur analytischen Untersuchung entnommen werden, wobei als Probengefäß (1) ein Hohlgefäß verwendet wird, das ein unteres Probenfach (31) und ein oberes Kopfraumfach (32) bildet, und wobei im Kopfraumfach (32) durch ein Auslegen der Länge und des Querschnitts des Hohlgefäßes entlang des Kopfraumfaches (32) ein Temperaturabfall eingestellt wird, **dadurch gekennzeichnet, dass** durch den eingestellten Temperaturabfall die Temperatureinwirkung für die Pyrolyse auf das Probenfach (31) beschränkt wird, wozu das Probengefäß (1) in ein beheizbares, als Vial ausgebildetes Modulfläschchen (14) eingesetzt und darin eingeschlossen wird, und das Modulfläschchen (14) als Schnittstelle in einen Roboter für die Probenvorbereitung und Probennahme in der chromatographischen Trenntechnik integriert wird.

2. Verfahren nach Anspruch 1, **dadurch gekennzeichnet**, das bei einer Temperatureinwirkung von bis zu 1400°C ein Temperaturabfall auf mindestens 300°C eingestellt wird.

3. Verfahren nach Anspruch 1 oder 2, **dadurch gekennzeichnet, dass** das Probengefäß (1) einen Schaft (5) aufweist, in den die Untersuchungssubstanz gegeben und dort der Pyrolyse unterworfen wird.

4. Verfahren nach einem der Ansprüche 1 bis 3, **dadurch gekennzeichnet, dass** das Probengefäß (1) an seinem einseitig offenen Ende durch ein Septum (3) oder eine selbstdichtende Trennwand (4) abgedeckt wird.

5. Verfahren nach Anspruch 4, **dadurch gekennzeichnet, dass** die Trennwand (4) in einem auf das offene Ende des Probengefäßes (1) aufsetzbaren Transportkopf (7) ausgebildet ist.

6. Verfahren nach Anspruch 1, **dadurch gekennzeichnet, dass** als Probengefäß (1) ein Einsatzfläschchen mit Einsatzfläschenhals mit einer verschließbaren Fläschchenöffnung (6) verwendet wird, das über Kopf in das Modulfläschchen (14) mit integrierter Heizvorrichtung (11) derart eingesetzt wird, dass der Einsatzfläschchenhals der von der Heizvorrichtung (11) erzeugten Temperatur ausgesetzt wird.

7. Verfahren nach einem der Ansprüche 1 bis 6, **dadurch gekennzeichnet, dass** die chromatographische Trennmethode in einem Gaschromatographen, einem Flüssigkeitschromatographen oder einem überkritischen Fluidchromatographen durchgeführt wird.

8. Verfahren nach einem der Ansprüche 1 bis 7, **dadurch gekennzeichnet, dass**, nachdem die Untersuchungssubtanz einer Pyrolyse unterworfen wurde, der resultierenden Probe in dem Probengefäß (1) ein Lösungsmittel zugegeben wird und daraus eine Probennahme für die analytische Untersuchung erfolgt.

9. Verfahren nach einem der Ansprüche 1 bis 8, **dadurch gekennzeichnet, dass** ein Derivatisierungsreagens vor oder nach einer Pyrolyse zur Probe gegeben wird.

10. Verfahren nach einem der Ansprüche 1 bis 9, **dadurch gekennzeichnet, dass** der Untersuchungssubstanz ein Extraktionsmittel zur Beseitigung von freien kleinen Molekülen, insbesondere Monomeren, zugegeben und entnommen wird.

11. Verfahren nach einem der Ansprüche 1 bis 10, **dadurch gekennzeichnet, dass** das Probengefäß (1) nach dem Einfüllen der Untersuchungssubstanz mit einem Inertgas gespült wird.

12. Verfahren nach einem der Ansprüche 1 bis 11, **dadurch gekennzeichnet, dass** in dem Probengefäß (1) vor und/oder nach der Pyrolyse eine chemische Reaktion stattfindet.

13. Verfahren nach einem der Ansprüche 1 bis 12, **dadurch gekennzeichnet, dass** eine mehrstufige Temperaturbehandlung mit unterschiedlichen Temperaturen zum Ausblenden von Flüssigkeiten oder Lösungsmitteln, insbesondere durch Gasfluss, durchgeführt wird.

14. Verfahren nach einem der Ansprüche 1 bis 13, **dadurch gekennzeichnet, dass** aus dem Probengefäß (1) eine Gasentnahme für die analytische Untersuchung erfolgt.

15. Vorrichtung zur Durchführung einer Probenvorbereitung für ein Analysegerät, insbesondere einen Chromatographen, wobei ein Probengefäß (1) teilweise mit einer Untersuchungssubstanz gefüllt und verschlossen ist und ein Hohlgefäß darstellt, das ein unteres Probenfach (31) und ein oberes Kopfraumfach (32) bildet, wobei im Kopfraumfach (32) durch ein Auslegen der Länge und des Querschnitts des Hohlgefäßes entlang des Kopfraumfaches (32) ein Temperaturabfall eingestellt ist, **dadurch gekennzeichnet, dass** das Probengefäß (1) durch eine selbstdichtende Abdeckung verschließbar ist, dass durch den Temperaturabfall die Temperatureinwirkung für die Pyrolyse auf das Probenfach (32) beschränkt wird, und dass das Probengefäß (1) als ein Einsatzfläschchen ausgebildet ist, das in einen Innenraum (40) eines mit einer Verschlusskappe verschließbaren als Vial ausgebildeten Modulfläschchens (14) eingesetzt ist, dessen unteres Teil (15) eine Heizvorrichtung (11) in das Modulfläschchen (14) integriert, das das Probenfach (31) des Probengefäßes (1) erhitzt, für eine Stromversorgung der Heizvorrichtung (11) Anschlusselemente aufweist für eine elektrische Verbindung zu einem separaten Aufheizsockel (33) und die Heizvorrichtung (11) für eine Pyrolyse ausgelegt ist und das Modulfläschchen (14) als Schnittstelle in einen Roboter für die Probenvorbereitung und Probennahme in der chromatographischen Trenntechnik integrierbar ist.

16. Vorrichtung nach Anspruch 15, **dadurch gekennzeichnet, dass** die Anschlusselemente als Metallringelektroden (21, 22) ausgeführt sind.

17. Vorrichtung nach Anspruch 15 oder 16, **dadurch gekennzeichnet, dass** das Probenfach (31) des Probengefäßes (1) in einer Heizspule (13) der Heizvorrichtung (11) angeordnet ist, und das Probenfach (31) schaftförmig ausgebildet ist mit einer axialen Länge, die weniger als 60 bis 70 % der Gesamtlänge des Probengefäßes (1) beträgt.

18. Vorrichtung nach einem der Ansprüche 15 bis 17, **dadurch gekennzeichnet, dass** das Probengefäß (1) reagenzglasartig ausgelegt ist zur Aufnahme von Lösungsmittel zum Auflösen von thermischen Abbauprodukten in dem Probengefäß (1).

19. Vorrichtung nach einem der Ansprüche 15 bis 18, **dadurch gekennzeichnet, dass** das Probengefäß (1) zylinderförmig ausgebildet ist mit einer Nennweite von 4 bis 40 mm und einem Schaft (5) mit einem Durchmesser von 1 bis 20 mm.

20. Vorrichtung nach einem der Ansprüche 15 bis 19, **dadurch gekennzeichnet, dass** in dem Behälterinnenraum (40) eine Mantelhülse, insbesondere ein Quarzrohr (25), angeordnet ist, die die Heizvorrichtung (11) gegenüber einer Innenwand des Modulfläschchens (14) abschirmt und die Wärme auf den Abschnitt des beheizten Probengefäßes (1) leitet.

21. Vorrichtung nach einem der Ansprüche 15 bis 20, **dadurch gekennzeichnet, dass** das Modulfläschchen (14) aus Metall, insbesondere Aluminium, oder einer Metalllegierung besteht.

22. Vorrichtung nach einem der Ansprüche 15 bis 21, **dadurch gekennzeichnet, dass** das Probengefäß (1) und das Modulfläschchen (14) durch eine gemeinsame, mit einem Septum (3) versehene Verschlusskappe derart verschließbar sind, dass durch eine Entnahmevorrichtung Proben aus dem Probengefäß (1) zur analytischen Untersuchung entnehmbar sind.

23. Vorrichtung nach einem der Ansprüche 15 bis 22, **dadurch gekennzeichnet, dass** das Probengefäß (1) gegen eine Feder (26) in das Modulfläschchen (14) eindrückbar und zum Septum (3) positionierbar ist.

24. Vorrichtung nach einem der Ansprüche 15 bis 23, **dadurch gekennzeichnet, dass** das Probengefäß (1) durch einen Flaschenhals des Modulfläschchens (14) zur Heizvorrichtung (11) ausrichtbar und/oder positionierbar ist.

## Claims

1. Method for preparing a sample for chromatographic separation methods, in which a sample vessel (1) is partially filled with a substance to be examined and is closed by a self-sealing cover, the substance to be examined is subjected to a pyrolysis in which at least one sample component is converted into another substance, and in which samples are taken from the sample vessel (1) by means of an extraction device for analytical examination, and the sample vessel (1) is a hollow vessel comprising a lower sample compartment (31) and an upper headspace compartment (32), and wherein a temperature drop is set in the headspace compartment (32) by laying out the length and cross-section of the hollow vessel along the headspace compartment (32), **characterized in that** due to the set temperature drop, the temperature effect for a pyrolysis is restricted to the sample compartment (31), for which the sample vessel (1) is placed in a heatable module container (14) formed as a vial and is closed therein, and the module container (14) is integrated into a robot for sample preparation and sampling in chromatographic separation technology as an interface.

2. Method according to claim 1, **characterized in that** a temperature drop of at least 300°C is set at a temperature of up to 1400°C.

3. Method according to claim 1 or 2, **characterized in that** the sample vessel (1) has a shaft (5) into which the substance to be examined is placed and there subjected to a pyrolysis.

4. Method according to one of claims 1 to 3, **characterized in that** the sample vessel (1) is covered at its end open on one side by a septum (3) or a self-sealing separating wall (4).

5. Method according to claim 4, **characterized in that** the separating wall (4) is formed at a transport head (7) that can be placed on the open end of the sample vessel (1).

6. Method according to claim 1, **characterized in that** an insert vail having an insert vial neck with a closable vail opening (6) is used as the sample vessel (1), which is inserted upside down into the module container (14), comprising an integrated heating device (11), such that the insert vial neck is exposed to the temperature generated by the heating device (11).

7. Method according to any one of claims 1 to 6, **characterized in that** the chromatographic separation method is carried out in a gas chromatograph, a liquid chromatograph or a supercritical fluid chromatograph.

8. Method according to any one of claims 1 to 7, **characterized in that** after the substance to be examined has been subjected to a pyrolysis, a solvent is added to the resulting sample in the sample vessel (1) and a sample is taken therefrom for analytical examination.

9. Method according to any one of claims 1 to 8, **characterized in that** a derivatization reagent is added to the sample before or after a pyrolysis.

10. Method according to any one of claims 1 to 9, **characterized in that** an extracting agent for eliminating free small molecules, in particular monomers, is added to and removed from the substance to be examined.

11. Method according to any one of claims 1 to 10, **characterized in that** the sample vessel (1) is flushed with an inert gas after filling with the substance to be examined.

12. Method according to any one of claims 1 to 11, **characterized in that** a chemical reaction takes place in the sample vessel (1) before and/or after a pyrolysis.

13. Method according to any one of claims 1 to 12, **characterized in that** a multistage temperature treatment with different temperatures is carried out to eliminate liquids or solvents, in particular by gas flow.

14. Method according to one of the claims 1 to 13, **characterized in that** a gas sample is taken from the sample vessel (1) for the analytical examination.

15. Device for carrying out a sample preparation for an analytical apparatus, in particular a chromatograph, wherein a sample vessel (1) is partially filled with a substance to be examined and is closed defining a hollow vessel comprising a lower sample compartment (31) and an upper head space compartment (32), wherein a temperature drop is set in the head space compartment (32) by laying out the length and the cross-section of the hollow vessel along the head space compartment (32), **characterized in that** the sample vessel (1) can be closed by a self-sealing cover, **in that** the temperature drop restricts the temperature effect for the pyrolysis to the sample compartment (32) and **in that** the sample vessel (1) is designed as an insert vial which is placed in an interior space (40) of a module container (14) which is designed as a vial and can be closed with a closure cap and whose lower part (15) integrates a heating device (11) into the module container (14) which heats the sample compartment (31) of the sample vessel (1), for a power supply of the heating device (11) connection elements are included providing an electrical connection to a separate heating base (33) and the heating device (11) is designed for a pyrolysis and the module container (14) can be integrated as an interface into a robot for sample preparation and sampling in chromatographic separation technology.

16. Device according to claim 15, **characterized in that** the connection elements are designed as metal ring electrodes (21, 22).

17. Device according to claim 15 or 16, **characterized in that** the sample compartment (31) of the sample vessel (1) is arranged in a heating coil (13) of the heating device (11), and the sample compartment (31) is shaft-shaped with an axial length which is less than 60 to 70% of the total length of the sample vessel (1).

18. Device according to any one of claims 15 to 17, **characterized in that** the sample vessel (1) is designed test tube like for receiving solvent for dissolving thermal degradation products in the sample vessel (1).

19. Device according to any one of claims 15 to 18, **characterized in that** the sample vessel (1) is cylindrical in shape with a nominal width of 4 to 40 mm and comprises a shaft (5) having a diameter of 1 to 20 mm.

20. Device according to any one of claims 15 to 19, **characterized in that** a cover sleeve, in particular a quartz tube (25), is arranged in the container interior (40), which shields the heating device (11) from an inner wall of the module container (14) and conducts the heat to the part of the heated sample vessel (1).

21. Device according to any one of claims 15 to 20, **characterized in that** the module container (14) is made of metal, in particular aluminum, or a metal alloy.

22. Device according to any one of claims 15 to 21, **characterized in that** the sample vessel (1) and the module container (14) can be closed by a common closure cap provided with a septum (3) in such a way that samples can be taken from the sample vessel (1) by a removal device for analytical examination.

23. Device according to any one of claims 15 to 22, **characterized in that** the sample vessel (1) can be pressed into the module container (14) against a spring (26) and positioned relative to the septum (3).

24. Device according to any one of claims 15 to 23, **characterized in that** the sample vessel (1) can be aligned and/or positioned to the heating device (11) by a bottle neck of the module container (14).

## Revendications

1. Procédé de préparation d'échantillons pour des méthodes de séparation par chromatographie, où un récipient à échantillons (1) est rempli en partie d'une substance à analyser et est fermé par un recouvrement à étanchéité automatique, la substance à analyser est soumise à une pyrolyse, dans laquelle au moins un composant d'échantillon est transformé en une autre substance, et où des échantillons sont prélevés du récipient à échantillons (1) pour l'analyse avec un dispositif de prélèvement, dans lequel est utilisé en tant que récipient à échantillons (1) un récipient creux, qui forme un compartiment à échantillons inférieur (31) et un compartiment d'espace de tête supérieur (32), et dans lequel une baisse de température est réglée dans le compartiment d'espace de tête (32) en configurant la longueur et la section transversale du récipient creux le long du compartiment d'espace de tête (32),
**caractérisé en ce que**
l'effet de la température pour la pyrolyse sur le compartiment à échantillons (31) est limité par la baisse de température réglée,
le récipient à échantillons (1) étant inséré à cet effet dans un flacon modulaire (14) pouvant être chauffé, réalisé en tant que fiole et y est enfermé, et le flacon modulaire (14) est intégré en tant qu'interface dans un robot pour la préparation d'échantillons et le prélèvement d'échantillons dans la technique de séparation par chromatographie.

2. Procédé selon la revendication 1, **caractérisé en ce qu'**une baisse de température est réglée sur au moins 300 °C lors d'un effet de la température jusqu'à 1400 °C.

3. Procédé selon la revendication 1 ou 2, **caractérisé en ce que** le récipient à échantillons (1) présente une tige (5), dans laquelle la substance à analyser est placée pour y être soumise à la pyrolyse.

4. Procédé selon l'une quelconque des revendications 1 à 3, **caractérisé en ce que** le récipient à échantillons (1) est recouvert sur son extrémité ouverte d'un côté par un septum (3) ou une paroi de séparation (4) à étanchéité automatique.

5. Procédé selon la revendication 4, **caractérisé en ce que** la paroi de séparation (4) est réalisée dans une tête de transport (7) pouvant être placée sur l'extrémité ouverte du récipient à échantillons (1).

6. Procédé selon la revendication 1, **caractérisé en ce qu'**est utilisé en tant que récipient à échantillons (1) un flacon d'insertion avec un col de flacon d'insertion avec une ouverture de flacon (6) pouvant être fermée, qui est insérée en position renversée dans le flacon modulaire (14) avec un dispositif de chauffage (11) intégré de telle manière que le col de flacon d'insertion est soumis à la température générée par le dispositif de chauffage (11).

7. Procédé selon l'une quelconque des revendications 1 à 6, **caractérisé en ce que** la méthode de séparation par chromatographie est mise en oeuvre dans un chromatographe à phase gazeuse, un chromatographe à phase liquide ou un chromatographe à phase fluide supercritique.

8. Procédé selon l'une quelconque des revendications 1 à 7, **caractérisé en ce que**, après que la substance à analyser a été soumise à une pyrolyse, un solvant est ajouté à l'échantillon en résultant dans le récipient à échantillons (1) et un prélèvement d'échantillons est effectué sur cette base pour l'analyse.

9. Procédé selon l'une quelconque des revendications 1 à 8, **caractérisé en ce qu'**un réactif de désactivation est ajouté à l'échantillon avant ou après une pyrolyse.

10. Procédé selon l'une quelconque des revendications 1 à 9, **caractérisé en ce qu'**un agent d'extraction est ajouté à la substance à analyser pour éliminer des petites molécules libres, en particulier des monomères, et est prélevé.

11. Procédé selon l'une quelconque des revendications 1 à 10,
**caractérisé en ce que**
le récipient à échantillons (1) est rincé avec un gaz inerte après le transvasement de la substance à analyser.

12. Procédé selon l'une quelconque des revendications 1 à 11,
**caractérisé en ce que**
une réaction chimique a lieu dans le récipient à échantillons (1) avant et/ou après la pyrolyse.

13. Procédé selon l'une quelconque des revendications 1 à 12,
**caractérisé en ce que**
un traitement thermique à plusieurs étapes est mis en oeuvre avec différentes températures pour masquer des liquides ou des solvants, en particulier à travers le flux de gaz.

14. Procédé selon l'une quelconque des revendications 1 à 13,
**caractérisé en ce que**
un prélèvement de gaz pour l'analyse est effectué depuis le récipient à échantillons (1).

15. Dispositif de mise en oeuvre d'une préparation d'échantillons pour un appareil d'analyse, en particulier un chromatographe,
dans lequel un récipient à échantillons (1) est rempli en partie avec une substance à analyser et est fermé et constitue un récipient creux, qui forme un compartiment à échantillons inférieur (31) et un compartiment d'espace de tête supérieur (32), dans lequel une baisse de température est réglée dans le compartiment d'espace de tête (32) en configurant la longueur et la section transversale du récipient creux le long du compartiment d'espace de tête (32), **caractérisé en ce que** le récipient à échantillons (1) peut être fermé par un recouvrement à étanchéité automatique, que l'effet de température pour la pyrolyse sur le compartiment à échantillons (32) est limité par la baisse de température, et que le récipient à échantillons (1) est réalisé en tant qu'un flacon d'insertion, qui est inséré dans un espace intérieur (40) d'un flacon modulaire (14) pouvant être fermé avec un capuchon de fermeture, réalisé en tant que fiole, dont la partie inférieure (15) intègre un dispositif de chauffage (11) dans le flacon modulaire (14), qui chauffe le compartiment à échantillons (31) du récipient à échantillons (1), présente pour une alimentation en courant du dispositif de chauffage (11) des éléments de connexion pour un raccordement électrique à un socle de chauffe (33) séparé et le dispositif de chauffage (11) est configuré pour une pyrolyse et le flacon modulaire (14) peut être intégré en tant qu'interface dans un robot pour la préparation d'échantillons et le prélèvement d'échantillons dans la technique de séparation par chromatographie.

16. Dispositif selon la revendication 15, **caractérisé en ce que** les éléments de connexion sont réalisés en tant qu'électrodes à anneau métallique (21, 22).

17. Dispositif selon la revendication 15 ou 16, **caractérisé en ce que** le compartiment à échantillons (31) du récipient à échantillons (1) est disposé dans une bobine de chauffage (13) du dispositif de chauffage (11), et le compartiment à échantillons (31) est réalisé en forme de tige avec une longueur axiale, qui est inférieure à 60 à 70 % de la longueur totale du récipient à échantillons (1).

18. Dispositif selon l'une quelconque des revendications 15 à 17, **caractérisé en ce que** le récipient à échantillons (1) est configuré à la manière d'une éprouvette pour recevoir du solvant pour dissoudre des produits de décomposition thermiques dans le récipient à échantillons (1).

19. Dispositif selon l'une quelconque des revendications 15 à 18, **caractérisé en ce que** le récipient à échantillons (1) est réalisé de manière cylindrique avec une largeur nominale de 4 à 40 mm et une tige (5) avec un diamètre de 1 à 20 mm.

20. Dispositif selon l'une quelconque des revendications 15 à 19, **caractérisé en ce qu'**un manchon enveloppant, en particulier un tube en quartz (25), est disposé dans l'espace intérieur de contenant (40), qui protège le dispositif de chauffage (11) par rapport à une paroi intérieure du flacon modulaire (14) et achemine la chaleur sur la section du récipient à échantillons (1) chauffé.

21. Dispositif selon l'une quelconque des revendications 15 à 20, **caractérisé en ce que** le flacon modulaire (14) est constitué de métal, en particulier d'aluminium, ou d'un alliage métallique.

22. Dispositif selon l'une quelconque des revendications 15 à 21, **caractérisé en ce que** le récipient à échantillons (1) et le flacon modulaire (14) peuvent être fermés par un bouchon de fermeture commun pourvu d'un septum (3) de telle manière que des échantillons peuvent être prélevés du récipient à échantillons (1) pour l'analyse par un dispositif de prélèvement.

23. Dispositif selon l'une quelconque des revendications 15 à 22, **caractérisé en ce que** le récipient à échantillons (1) peut être enfoncé contre un ressort (26) dans le flacon modulaire (14) et peut être positionné par rapport au septum (3).

24. Dispositif selon l'une quelconque des revendications 15 à 23, **caractérisé en ce que** le récipient à échantillons (1) peut être orienté et/ou positionné par rapport au dispositif de chauffage (11) par un col de bouteille du flacon modulaire (14).
